(19) Europäisches Patentamt
European Patent Office
Office européen des brevets

(11) **EP 4 394 494 A1**

(12) **EUROPEAN PATENT APPLICATION**
published in accordance with Art. 153(4) EPC

(43) Date of publication:
**03.07.2024 Bulletin 2024/27**

(51) International Patent Classification (IPC):
**G02F 1/137** (2006.01)   **G02F 1/1337** (2006.01)
**G02B 5/30** (2006.01)

(21) Application number: **22861600.9**

(22) Date of filing: **10.08.2022**

(52) Cooperative Patent Classification (CPC):
**G02B 5/30; G02F 1/1337; G02F 1/137**

(86) International application number:
**PCT/KR2022/011952**

(87) International publication number:
**WO 2023/027390 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.08.2021 KR 20210111496**

(71) Applicant: **Dongwoo Fine-Chem Co., Ltd.**
**Iksan-si, Jeollabuk-do 54631 (KR)**

(72) Inventors:
• **KIM, Dong-Hwi**
**Sejong 30100 (KR)**
• **KIM, Sung-Su**
**Pyeongtaek-si, Gyeonggi-do 17802 (KR)**
• **LEE, Seung-Sin**
**Hwaseong-si, Gyeonggi-do 18496 (KR)**

(74) Representative: **Betten & Resch**
**Patent- und Rechtsanwälte PartGmbB**
**Maximiliansplatz 14**
**80333 München (DE)**

(54) **OPTICAL LAMINATE AND MANUFACTURING METHOD THEREFOR, SMART WINDOW COMPRISING SAME, AND VEHICLE AND BUILDING WINDOW OR DOOR EMPLOYING SAME**

(57)     The present invention relates to a transmittance-variable optical laminate and a manufacturing method therefor, a smart window comprising same, and a vehicle and a building window or door employing same, the optical laminate comprising: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer, wherein at least one of the first transparent conductive layer and the second transparent conductive layer is formed to come into direct contact with one of the first polarizing plate and the second polarizing plate, and at least one of the first polarizing plate and the second polarizing plate comprises a reflective polarizing plate.

FIG. 1

## Description

## Technical Field

The present disclosure relates to a variable transmittance optical stack, a manufacturing method therefor, a smart window including the same, and a vehicle and building window or door employing the same.

## Background Art

In general, there are many cases in which an external light blocking coating is applied to a window of a means of transportation such as a vehicle. However, a transmittance of a conventional window of a means of transportation is fixed, and a transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing the transmittance of light when a voltage is applied has been developed.

The variable transmittance optical stack is driven by changing the transmittance by driving liquid crystal according to voltage application. The variable transmittance optical stack developed so far is manufactured by forming a conductive layer for driving liquid crystal on a separate or additional substance, and then combining the conductive layer with other elements such as a polarizing plate.

For example, Japanese Patent Publication Application No. 2018-010035 discloses a variable transmittance optical stack including a transparent electrode layer formed on a polycarbonate (PC) substrate having a predetermined thickness.

However, when a separate or additional substance is included to form the conductive layer as described above, as a manufacturing process becomes complicated, manufacturing costs is increased, the thickness of the stack is increased, and the transmittance is changed due to occurrence of phase difference.

Accordingly, there is a need to develop a transmittance variable optical stack capable of simplifying a manufacturing process, reducing the thickness by not including a separate substrate for forming a conductive layer.

## Disclosure

## Technical Problem

The present disclosure is intended to provide a variable transmittance optical stack with simplified manufactured process by not including a separate substrate for forming a conductive layer.

Another objective of the present disclosure is to provide a variable transmittance optical stack in which the thickness is significantly reduced by no including a separate substrate for forming a conductive layer.

Yet another objective of the present disclosure is to provide a variable transmittance optical stack in which transmittance thereof is improved in a light transmissive mode without a separate or additional substance for forming a conductive layer.

Still another objective of the present disclosure is to provide a variable transmittance optical stack, which includes at least one reflective polarizing plate to improve a variable transmittance range between a transmissive mode and a light blocking mode.

Still another objective of the present disclosure is to provide a smart window including the variable transmittance optical stack, and a vehicle or building window to which the same is applied.

However, the problem to be solved by the present disclosure is not limited to the problems mentioned above, and other problems not mentioned will be clearly understood by those skilled in the art from the description below.

## Technical Solution

The present disclosure relates to a variable transmittance optical stack including: a first polarizing plate; a first transparent conductive layer formed on one surface of the first polarizing plate; a second polarizing plate opposite to the first polarizing plate; a second transparent conductive layer formed on one surface of the second polarizing plate, and opposite to the first transparent conductive layer; and a liquid crystal layer provided between the first transparent conductive layer and the second transparent conductive layer, at least one transparent conductive layer of the first transparent conductive layer and the second transparent conductive layer may be formed by directly contacting with any one polarizing plate of the first polarizing plate and the second polarizing plate, and at least one polarizing plate of the first polarizing plate and the second polarizing plate may include a reflective polarizing plate.

In a first aspect of the present disclosure, the first polarizing plate and the second polarizing plate may include a reflective polarizing plate.

In a second aspect of the present disclosure, at least one polarizing plate of the first polarizing plate and the second polarizing plate may have a multi-layered structure including an absorptive polarizing plate and a reflective polarizing plate.

In a third aspect of the present disclosure, a transmission axis of the first polarizing plate and a transmission axis of the second polarizing plate may be perpendicular to each other.

In a fourth aspect of the present disclosure, at least one polarizing plate of the first polarizing plate and the second polarizing plate may include one or more types of functional layers selected from a group consisting of a protective layer, a retardation matching layer, and a refractive index-matching layer.

In a fifth aspect of the present disclosure, at least one polarizing plate of the first polarizing plate and the second polarizing plate may have a thickness ranged from 30 to $200 \mu m$.

In a sixth aspect of the present disclosure, at least one transparent conductive layer of the first transparent conductive layer and the second transparent conductive layer may be formed by directly contacting with any one polarizing plate of the first polarizing plate and the second polarizing plate without a separate or additional substance between the polarizing plate and the transparent conductive layer.

In a seventh aspect of the present disclosure, at least one transparent conductive layer of the first transparent conductive layer and the second transparent conductive layer may be formed by directly contacting with any one polarizing plate of the first polarizing plate and the second polarizing plate with a highly adhesive layer between the polarizing plate and the transparent conductive layer.

In an eighth aspect of the present disclosure, at least one transparent conductive layer of the first transparent conductive layer and the second transparent conductive layer may include one or more types selected from a group consisting of transparent conductive oxide, metal, carbonaceous material, conductive polymers, conductive ink, and nanowires.

In a ninth aspect of the present disclosure, the liquid crystal layer may be driven in a twisted nematic (TN) mode.

In a tenth aspect of the present disclosure, the liquid crystal layer may include one or more types selected from a group consisting of a ball spacer and a column spacer.

In an eleventh aspect of the present disclosure, a ball spacer may have a diameter ranged from 1 to $10 \mu m$.

In a twelfth aspect of the present disclosure, an occupancy area of the ball spacer in the liquid crystal layer may be ranged from 0.01 to 10% of the area of the liquid crystal layer.

In a thirteenth aspect of the present disclosure, the variable transmittance optical stack may include one or more types selected from a group consisting of an alignment film, a pressure sensitive adhesive/adhesive layer, an ultraviolet ray absorption layer, and a hard coating layer.

The present disclosure relates to a manufacturing method for a variable transmittance optical stack.

The present disclosure relates to a smart window including a variable transmittance optical stack.

The present disclosure relates to a vehicle in which a smart window is applied to at least one of a front window, a rear window, a side window, a sunroof window, and an inner partition thereof.

The present disclosure relates to a window and a door for a building, the window and the door including a smart window.

## Advantageous Effects

Furthermore, the variable transmittance optical stack according to the present disclosure is configured to omit the process of forming a conductive layer on a separate substrate for the conventional optical stack and bonding the conductive layer and other members, so the manufacturing process thereof can be simplified in comparison to the conventional optical stack.

The variable transmittance optical stack according to the present disclosure does not include a separate or additional substrate for forming the conductive layer as the conductive layer is directly formed on one surface of the polarizing plate, so that the thickness thereof may be significantly reduced in comparison to the thickness of the conventional optical stack.

The variable transmittance optical stack according to the present disclosure does not include a separate or additional substrate for forming the conductive layer as the conductive layer is directly formed on one surface of the polarizing plate, so that transmittance in the light transmissive mode may be improved in comparison to the thickness of the conventional optical stack.

Furthermore, the variable transmittance optical stack includes at least one - reflective polarizing plate, so that a variable transmittance range between the light transmissive mode and the light blocking mode can be improved compared to the conventional optical stack.

## Description of Drawings

FIG. 1 is a view showing a stack structure of a variable transmittance optical stack according to an embodiment of the present disclosure.

FIGS. 2A to 2C are views showing a stack structure of a variable transmittance optical stack for describing arrangement of a reflective polarizing plate according to one or a plurality of embodiments of the present disclosure.

FIGS. 3A and 3B are views each showing a stack structure of a variable transmittance optical stack according to another embodiment of the present disclosure.

## Best Mode

The present disclosure relates to a variable transmittance optical stack including at least one reflective polarizing plate, and specifically, relates to a variable transmittance optical stack having a conductive layer for driving a liquid crystal directly formed on one surface of a polarizing plate so that a thickness of the stack is reduced without a separate or additional substance for forming the conductive layer to improve the transmittance in a light transmissive mode, and including at least one reflective polarizing plate to improve the variable transmittance range between the light transmissive mode and a light blocking mode.

More specifically, the present disclosure relates to a variable transmittance optical stack including: a first polarizing plate; a first transparent conductive layer formed on one surface of the first polarizing plate; a second polarizing plate opposing the first polarizing plate; a second transparent conductive layer formed on one surface of the second polarizing plate, and opposing the first transparent conductive layer; and a liquid crystal layer provided between the first transparent conductive layer and the second transparent conductive layer. At least one transparent conductive layer of the first transparent conductive layer and the second transparent conductive layer is formed by directly contacting with any one of the first polarizing plate and the second polarizing plate, and at least one of the first polarizing plate and the second polarizing plate includes a reflective polarizing plate.

The variable transmittance optical stack of the present disclosure is particularly suitable for technical fields where light transmittance can be changed in response to application of voltage, for example, may be used for a smart window, etc.

The smart window is an optical structure controlling the amount of light or heat passing through the window by changing light transmittance in response to an electrical signal. In other words, the smart window is provided to be changed into a transparent, opaque or translucent state by voltage and is called variable transmittance glass, lighting control glass, or smart glass.

The smart window may be used as partitions for partitioning an internal space of vehicles and buildings or for protecting privacy, or as skylights arranged in openings of buildings, and may be used as highway signs, noticeboards, scoreboards, clocks or advertising screens, and may be used to replace glass of a means of transportation, such as windows or sunroof windows of cars, buses, aircrafts, ships, or trains.

The variable transmittance optical stack of the present disclosure may also be used for the smart window of the various technical fields mentioned above, but since the conductive layer is directly formed in the polarizing plate, there is no need to include a separate or additional substance for forming the conductive layer and the thickness thereof is thin and is advantageous in the flexuosity, so the optical stack of the present disclosure may be used to be particularly suitable for a smart window of a vehicle or a building. According to one or a plurality of embodiments, the smart window to which the variable transmittance optical stack of the present disclosure is applied may be used for front windows, rear windows, side windows, and sunroof windows of a vehicle, or windows and doors for a building. Furthermore, the smart window may be used to not only an external light blocking use, but also an internal space partitioning use or a privacy protecting use such as an inner partition for a vehicle or a building.

Hereinbelow, embodiments of the present disclosure will be described in detail with reference to drawings. However, the following drawings accompanied to this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus do not limit the present disclosure. In this specification, an element expressed in a singular form may be plural elements unless it is necessarily singular in the context. For example, "the polarizing plate" used in the specification may mean at least one polarizing plate of the first polarizing plate and the second polarizing plate, and "the transparent conductive layer" may mean at least one transparent conductive layer of the first transparent conductive layer and the second transparent conductive layer.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", "lower portion", "above", "upper surface", and "upper portion" may be used to easily describe correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" with respect to another element may be placed "on" the another element. Accordingly, the exemplary term "below" may include both downward and upward directions. An element may be aligned in a different direction, and accordingly, the spatially relative terms may be interpreted according to orientation.

The "planar direction" used in this specification may be interpreted as a direction perpendicular to a polarizing plate and/or a transparent conductive layer, that is, a direction viewed from the user's view side.

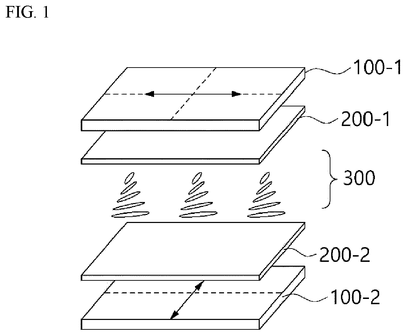

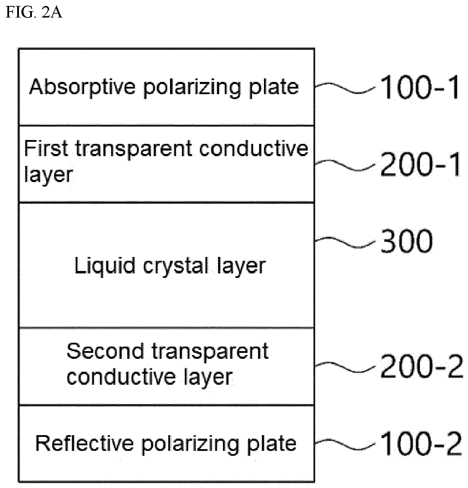

FIG. 1 is a view showing a stack structure of a variable transmittance optical stack according to an embodiment of the present disclosure. FIGS. 2A to 2C are views each showing a stack structure of a variable transmittance optical stack in order to illustrate arrangement of a reflective polarizing plate according to one or a plurality of embodiments of the present disclosure.

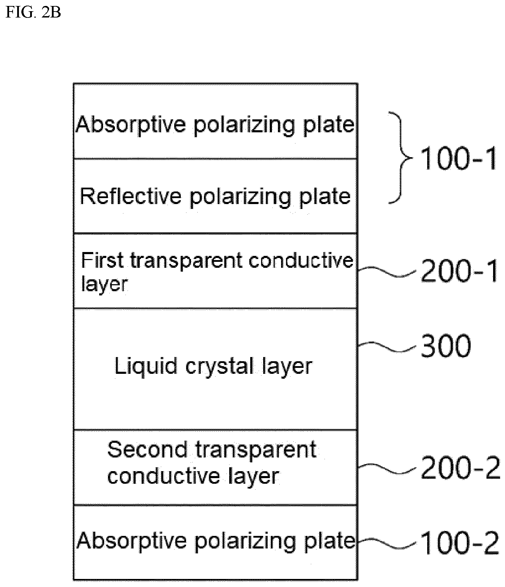

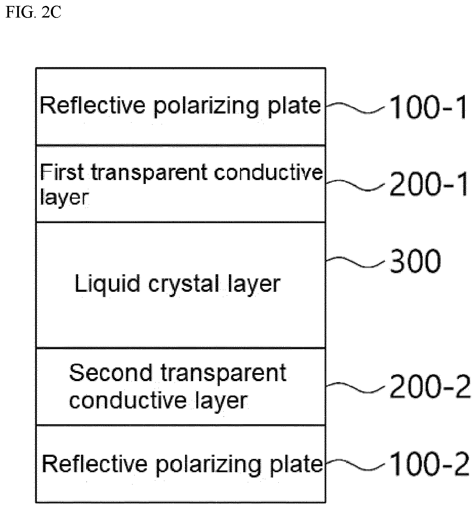

Referring to FIGS. 1 and 2, the variable transmittance optical stack according to the embodiment of the present disclosure includes a first polarizing plate 100-1, a second polarizing plate 100-2, a first transparent conductive layer 200-1, a second transparent conductive layer 200-2, and a liquid crystal layer 300.

The polarizing plate 100 includes at least one reflective polarizing plate, and may include an absorptive polarizing plate if necessary. For example, a first polarizing plate 100-1 may be an absorptive polarizing plate and a second polarizing plate 100-2 may be a reflective polarizing plate (referring to FIG. 2A), and the first polarizing plate 100-1 may have a multi-layered structure with an absorptive polarizing plate and a reflective polarizing plate and the second polarizing plate 100-2 may be an absorptive polarizing plate (referring to FIG. 2B), and both the first polarizing plate 100-1 and the second polarizing plate 100-2 may be reflective polarizing plates (referring to FIG. 2C).

The reflective polarizing plate is not particularly limited as long as it can improve a variable transmittance range between a light transmissive mode and a light blocking mode of the optical stack, and may use reflective polarizing plates currently developed or to be developed, and in some embodiments, may include a pattern part formed on at least one surface of the reflective polarizing plate.

In an embodiment, the reflective polarizing plate may include a form of a stack in which a first layer and a second layer are alternately laminated by a plurality of times. An x-axial refractive index ($n1x$) of the first layer is different from a y-axial refractive index ($n1y$), and a y-axial refractive index ($n1y$) of the first layer is formed to be substantially equal to a y-axial refractive index ($n2y$) of the second layer.

Therefore, among light incident to the reflective polarizing plate, light having a y-axial linear polarization element penetrates through the reflective polarizing plate and is emitted into the light having y-axial linear polarization element. At this point, a direction (y-axial direction) in which the emitted light penetrates is a transmission axis.

Meanwhile, the reflective polarizing plate may satisfy following Equation 1.

$$[\text{Equation 1}]$$

$$t1 \cdot n1x + t2 \cdot n2x = \lambda/2$$

In Equation 1, $t1$ is a thickness in a Z-axial direction of the first layer and $t2$ is a thickness in a Z-axial direction of the second layer, $n1x$ is an x-axial refractive index of the first layer, $n2x$ is an x-axial refractive index of the second layer, and $\lambda$ is a wavelength of incident light.

When the reflective polarizing plate satisfies Equation 1, among light having a wavelength $\lambda$ incident to the reflective polarizing plate, light having an x-axial linear polarization element is reflected by the reflective polarizing plate. At this point, a reflected direction (x-axial direction) of the reflected light is a reflective shaft.

According to one or a plurality of embodiments, the reflective polarizing plate is variously changed in a thickness in a z-axial direction of the first layer and a thickness in a z-axial direction of the second layer to satisfy Equation 1 with respect to the entire wavelength range of visible light. In this case, not only a single color, but across white light, light having an x-axial linear polarization element is reflected as the light having the x-axial linear polarization element and light having a y-axial linear polarization element may penetrate as the light having the y-axial linear polarization element.

The first layer and the second layer of the reflective polarizing plate may use layers currently developed or to be developed within a range that does not deteriorate the objectives of the present disclosure. For example, the first layer may use stretched polyethylenenaphthalate (PEN) and the second layer may use copolyester of naphthalene dicarboxylic acid and terephthalic or isothalic acid (coPEN).

The absorptive polarizing plate may include a polarizer, and the polarizer may use polarizers currently developed or to be developed, and may use, for example, a stretched polarizer or a coated polarizer.

According to the embodiment, the stretched polarizer may include a stretched polyvinyl alcohol (PVA)-based resin. The PVA-based resin may be PVA-based resin obtained by saponifying polyvinyl acetate resin. In addition to polyvinyl acetate that is homopolymer of vinyl acetate, vinyl acetate and a copolymer with other monomers that can be copolymerized with vinyl acetate may be used as the polyvinyl acetate-based resin. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin includes a denatured resin, and for example, may be polyvinyl formal or polyvinyl acetal denatured into aldehyde.

According to the embodiment, the coated polarizer may be formed of a composition for liquid crystal coating, and, at this point, the composition for liquid crystal coating may contain reactive liquid crystal compound, and dichroic dye, etc.

The reactive liquid crystal compound may mean a compound, for example, containing a mesogen frame, etc., and also containing one or more polymerizable functional groups. The reactive liquid crystal compound may be variously known by the name reactive mesogen (RM). The reactive liquid crystal compound may constitute a cured film with polymer network formed while being polymerized by light or heat and maintaining liquid crystal arrangement.

The reactive liquid crystal compound may be a mono-functional liquid crystal compound or a multi-functional liquid crystal compound. The mono-functional liquid crystal compound is a compound having 1 polymerizable functional group, and the multi-functional liquid crystal compound may mean a compound having two or more polymerizable functional groups.

The dichroic dye is a substance contained in the composition for liquid crystal coating to impart the polarization characteristic, and has a property in which absorbance in a direction of long axis of molecule and absorbance in a direction of short axis are different. The dichroic dyes may adopt dichroic dyes currently developed or to be developed, and may contain one or more types of dyes selected from a group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, and the like. Furthermore, the composition for liquid crystal coating may contain leveling agents, polymerization initiators, etc. within a range that does not deteriorate the polarization characteristics of a coating film.

A transmission axis of the first polarizing plate 100-1 and a transmission axis of the second polarizing plate 100-2 are preferably arranged to be perpendicular to each other in a planar direction. In this case, it is advantageous to improve the variable transmittance range between the light transmissive mode and the light blocking mode of the optical stack according to driving of the liquid crystal.

According to one or a plurality of embodiments, at least one polarizing plate of the first polarizing plate and the second polarizing plate may include one or more kinds of functional layers selected from a group consisting of a protective layer, a retardation matching layer, and a refractive index-matching layer.

The protective layer is provided to preserve the polarization characteristic of the polarizer from a post-processing and external environment, and may be implemented into a form such as a protective film, etc.

The protective layer may be used as a double layer structure in which one or more protective layers are successively laminated, and may be formed by being combined with another functional layer.

According to one or a plurality of embodiments, the protective layer may include one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The retardation matching layer may be provided to complement optical properties of the optical stack, and may be implemented in a retardation film, and a retardation film currently developed or to be developed may be used therefor. For example, a quarter-wave plate (1/4 wave plat) or a half-wave plate (1/2 wave plat) may be used to delay a phase difference of light, and may be used alone or in combination.

The retardation matching layer may be used alone, and may be used while being combined with other functional layers.

The retardation matching layer may use a polymer stretched film, obtained by stretching a polymer film that can give optical anisotropy by stretching by an appropriate method or a liquid crystal polymerization.

According to the embodiment, the polymer stretched film may use a polymer layer including: polyolefin such as polyethylene (PE), polypropylene (PP), etc.; cyclo olefin polymer (COP) such as polynorbornene, etc.; polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers.

An obtaining method of the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using common solvent, for example, solvent such as chloroform, 2 methylen chloride, and then is solidified in a cast dry manner, and accordingly the non-stretched film may be cast-molded.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain reactive liquid crystal compound in a polymerized state. The description of the reactive liquid crystal compound of the coated polarizer described above may be equally applied to the reactive liquid crystal compound.

In one or a plurality of embodiments, the thickness of the retardation matching layer may be a thickness of $10 \mu m$ to $100 \mu m$ in the polymer stretched film, and may be a thickness of $0.1 \mu m$ to $5 \mu m$ in the liquid crystal polymerized film.

The refractive index-matching layer is provided to compensate for the refractive index difference of the optical stack by the transparent conductive layer 200, and may serve to improve the visible characteristic by reducing the difference of the refractive index. Furthermore, the refractive index-matching layer may be provided to correct a color based on the transparent conductive layer 200. Meanwhile, when the transparent conductive layer has a pattern, the refractive index-matching layer may correct the transmittance difference of a region with the pattern and a non-pattern region without the pattern.

Specifically, the transparent conductive layer 200 is laminated close to other members having a refractive index different therefrom, and due to the difference of the refractive index between the transparent conductive layer and another layer close thereto, the difference of optical transmittance may be caused. Specifically, when a pattern is formed on the transparent conductive layer, a problem in that the pattern region and the non-pattern region are visually distinguished from each other. Therefore, the refractive index-matching layer is included to compensate for refractive index, thereby reducing the difference with the optical transmittance of the optical stack. Specifically, when a pattern is formed on the transparent conductive layer, the pattern region and the non-pattern region should be provided so as not to be visually distinguished.

According to the embodiment, the refractive index of the refractive index-matching layer may be appropriately selected according to a material of another adjacent member, and may be preferably between 1.4 and 2.6, more preferably, may be between 1.4 and 2.4. In this case, it is possible to prevent optical loss due to sharp difference of the refractive index between another member such as the polarizer and the transparent conductive layer 200.

The refractive index-matching layer is not particularly limited as long as it can prevent the sharply refractive difference between other members, and the transparent conductive layer 200, and may use a compound used in the formation of refractive index-matching layers currently developed or to be developed. For example, the refractive index-matching layer 150 may be formed from refractive index-matching layer formation composition including polymerizable isocyanate compound.

According to the embodiment, the polarizing plate 100 may include other functional layers to assist or strengthen the characteristics of the polarizing plate in addition to the above-mentioned functional layers and, for example, may include an overcoat layer, etc. in order to further improve the mechanical durability.

According to one or a plurality of embodiments, the polarizing plate 100 may have a thickness of between 30 and 200 $\mu$m, and preferably, a thickness of between 30 and 170 $\mu$m, and more particularly, a thickness of between 50 and 150 $\mu$m. In this case, while the polarizing plate 100 maintains the optical characteristic, the optical stack having a thin thickness can be manufactured.

The transparent conductive layer 200 is provided to drive the liquid crystal layer 300, and may be formed by directly contacting with the polarizing plate 100. For example, as shown in FIG. 1, the first transparent conductive layer 200-1 and the second transparent conductive layer 200-2 may be respectively formed by directly contacting with the first polarizing plate 100-1 and the second polarizing plate 100-2.

Conventionally, an optical stack used to manufacture a smart window, etc. is manufactured by forming a conductive layer for driving a liquid crystal on one surface of a substance and bonding-coupling a second surface of the substrate to a polarizing plate. However, according to the present disclosure, the variable transmittance optical stack has the conductive layer directly formed on one surface of the polarizing plate without a separate or additional substance for forming the conductive layer, and thus is characterized to improve the transmittance in the light transmissive mode and the curvature characteristic while reducing the entire thickness of the laminate.

According to the embodiment, the transparent conductive layer 200 may be formed by being directly deposited on one surface of the polarizing plate 100. At this point, in order to improve the adhesion between the transparent conductive layer 200 and the polarizing plate 100, the transparent conductive layer 200 may be formed by performing pre-processing such as a corona processing or a plasma processing on one surface of each polarizing plate 100, and then directly contacting with the surface of each polarizing plate 100 to which the pre-processing is performed. The pre-processing is not limited to the corona processing or the plasma processing, and may adopt a pre-processing currently developed or to be developed without harming the purpose of the present disclosure.

According to another embodiment of the present disclosure, in order to improve the adhesion between the transparent conductive layer 200 and the polarizing plate 100, the transparent conductive layer 200 may be formed by directly contacting with each polarizing plate with the highly adhesive layer (not shown) located therebetween, the highly adhesive layer being provided on one surface of each polarizing plate 100.

The transparent conductive layer 200 is preferably have the transmittance with respect to visible light of 50% or more, and for example, may include one or more types selected from a group consisting of transparent conductive oxide, metal, carbonaceous material, conductive polymer, conductive ink, and nanowires, but the present disclosure is not limited thereto, and a material of a transparent conductive layer currently developed or to be developed may be used.

According to one or a plurality of embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, may include argentum - palladium - cuprum (APC) alloy or cuprum - calcium (CuCa) alloy. The carbonaceous material may include one or more types selected from a group consisting of carbon nanotube (CNT), graphene, etc., and the conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 200 may be formed by combining these matters in a structure of two or more layers. For example, in order to reduce the reflectance of incident light and increase the transmittance, the transparent conductive layer may be formed in a structure of two layers including a metal layer and a transparent conductive oxide.

The transparent conductive layer 200 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

The liquid crystal layer 300 may adjust transmittance of light incident in one or a plurality of directions according to electric fields to change a driving mode of the optical stack.

The liquid crystal layer 300 may include liquid crystal compounds and, for example, in an optical control region, may be located in a space provided by a sealant layer (not shown) and a spacer (not shown) that are provided between the first polarizing plate 100-1 and the second polarizing plate 100-2.

The liquid crystal compounds are driven in response to electric fields and is not particularly limited as long as it can control transmittance of light, and liquid crystal compounds currently developed or to be developed may be used and, for example, the description of reactive liquid crystal compound of the above-mentioned coated polarizer may be equally applied thereto.

According to an embodiment, the liquid crystal layer 300 may be driven in a twisted nematic (TN) mode. In this case, optical design with the polarizing plate 100 described above may improve the variable transmittance range between the light transmissive mode and the light blocking mode of the optical stack, and enlargement of the optical stack may be efficiently performed, which is an advantage.

The sealant may include curable resins as base resins. As the base resins, UV curable resins or heat curable resins that are known to be usable for sealants in the art may be used. The ultraviolet curable resins may be polymers of UV curable monomers. The heat curable resins may be polymers of heat curable monomers.

As the base resins of the sealant, for example, acrylate-based resins, epoxy-based resins, urethane-based resins, phenol-based resins, or compounds of these resins. According to an embodiment, the base resins may be acrylate-based resins, and the acrylate-based resins may be polymers of acrylic monomers. For example, the acrylic monomers may be multifunctional acrylate. According to another embodiment, the sealant may include monomer substances in addition to the base resins. For example, the monomer substances may be monofunctional acrylate. In the specification, the monofunctional acrylate may mean compounds having one acryl group, and the multifunctional acrylate may mean compounds having two or more acryl group. The curable resins may be cured by UV irradiation and/or heating. The UV irradiation condition or heat condition may be performed appropriately within the scope that does not damage the objective of the present disclosure. In case of need, the sealant may include initiators, for example, optical initiators or heat initiators.

The sealant may be provided in a method commonly used in the art and, for example, may be formed drawing a sealant at an outer portion of the liquid crystal layer (i.e., inactivate region) with a dispenser having a nozzle.

The spacer may include at least one spacer among a ball spacer and a column spacer, and specifically, may preferably be a ball spacer. The ball spacer may include one or more ball spaces, and preferably has a diameter between 1 and 10 μm. Furthermore, when viewed in a planar direction, a region where the ball spacer is occupied in the liquid crystal layer 300 is preferably 0.01 to 10% of the area of the liquid crystal layer 300 in an aspect of improvement of user's visibility and transmittance in a light transmissive mode.

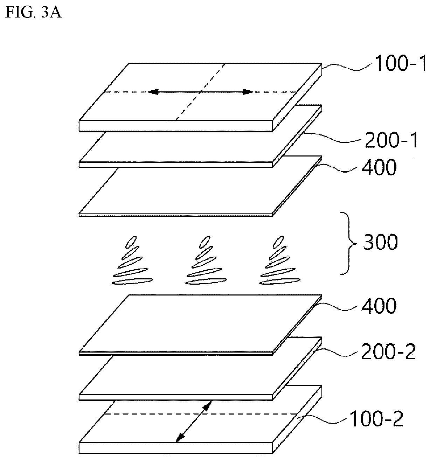

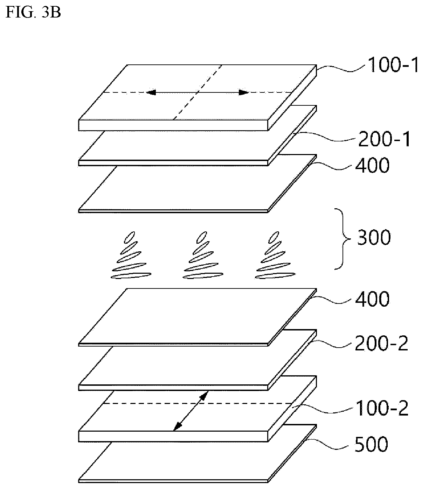

According to the embodiment, the liquid crystal layer 300 may include an alignment film 400 if necessary (referring to FIG. 3A) and, alignment films 400, for example, may be formed on opposite surfaces of the liquid crystal layer 300 including liquid crystal compounds.

The alignment film 400 is not particularly limited as long as it adds the orientation to the liquid crystal compounds. For example, the alignment film 400 may be manufactured by coating and hardening an alignment film coating composition containing aligned polymers, photopolymerization initiators, and solvent. Although the aligned polymer is not particularly limited, the aligned polymer may be polyacrylate-based resin, polyamic resin, polyimide-based resin, polymer having cinnamate groups, etc. and may use polymer capable of expressing orientation, the polymer being currently developed or to be developed.

The variable transmittance optical stack of the present disclosure may include other members without affecting the objectives of the present disclosure and, for example, may include the pressure sensitive adhesive/adhesive layer 500 (referring to 3B) and may include an ultraviolet ray absorption layer, a hard coating layer, etc.

The pressure sensitive adhesive/adhesive layer 500 may be formed using an adhesive or a pressure sensitive adhesive, and have appropriate pressure sensitive adhesion/adhesion to prevent peeling, bubbles, etc. from occurring when handling the optical stack, and preferably have transparency and thermal stability.

The adhesive may adopt an adhesive currently developed or to be developed, for example, may use photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, photopolymerization initiators, and the like.

The reactive oligomers are important components that determine the properties of adhesive, and form polymer binding by photopolymerization to form a cured film. For example, the available oligomers may be polyester-based resin, polyether-based resin, polyurethane-based resin, epoxy-based resin, polyacryl-based resin, silicon-based resin, and the like.

The reactive monomers may serve as crosslinker, diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiator may absorb light energy to generate radicals or cations to initiate photopolymerization, and a proper kind may be selected and used depending on photopolymerization resin.

The pressure sensitive adhesive may use a pressure sensitive adhesive currently developed or to be developed. According to one or a plurality of embodiments, as the pressure sensitive adhesive, acrylic-based pressure sensitive adhesive, rubber-based pressure sensitive adhesive, silicon-based pressure sensitive adhesive, urethane-based pressure sensitive adhesive, polyvinyl alcohol-based pressure sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like. The pressure sensitive adhesive is not particularly limited as long as it has pressure sensitive adhesion and viscoelasticity. For ease of acquisition, preferably, the pressure sensitive adhesive may include acrylic-based pressure sensitive adhesive, for example, may be (meth) acrylate copolymers, crosslinkers, solvents, and the like.

The crosslinkers may adopt crosslinkers currently developed or to be developed and, for example, polyisocyanate compounds, epoxy resins, melamine resins, urea resins, dialdehydes, methylol polymers, etc., and may preferably include polyisocyanate compounds.

The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The thickness of the pressure sensitive adhesive/adhesive layer 500 may be appropriately determined depending on a kind of resins serving as the pressure sensitive adhesive/adhesive, the strength of the pressure sensitive adhesive/adhesive, the environment where the pressure sensitive adhesive/adhesive is used, and the like. According to an embodiment, the pressure sensitive adhesive/adhesive layer may have a thickness between 0.01 and 50 $\mu$m in order to ensure sufficient adhesion and minimize the thickness of the optical stack and, preferably, may have a thickness between 0.05 and 20 $\mu$m and, more preferably, may have a thickness between 0.1 and 10 $\mu$m.

The ultraviolet ray absorption layer is not particularly limited as long as it is to prevent deterioration of the optical stack due to UV rays. For example, the ultraviolet ray absorption layer may use salicylic acid-based ultraviolet absorber (phenyl salicylate, p-tert-butylsalicylate, etc.), benzophenone-based ultraviolet absorber(2,4-dihydroxybenzophenone, 2,2'-dihydroxy-4,4'-dimethoxybenzophenone, etc.), benzotriazole-based ultraviolet absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based ultraviolet absorber(2'-ethylhexyl-2-cyano-3,3-diphenylacrylate, ethyl-2-cyano-3-(3',4'-methylene dioxyphenyl)-acrylate, etc.), triazine-based ultraviolet absorber, etc.. The benzotriazole-based ultraviolet absorber or the triazine-based ultraviolet absorber that have high transparency and the excellent effect of preventing deterioration of the polarizing plate or the variable transmittance layer may be preferably used as the ultraviolet ray absorption layer, and the benzotriazole-based ultraviolet absorber having more appropriate spectral absorption spectroscopy absorption spectrum may be preferable. The benzotriazole-based ultraviolet absorber may be changed into "-Bis" and, for example, may be 6,6'-methylenebis(2-(2H-benzo[d][1,2,3] triazole-2-yl)-4-(2,4,4-trimethylpentane-2-yl)phenol), 6,6'-methylenebis(2-(2H-benzo[d][1,2,3]triazole-2-yl)-4-(2-hydroxyethyl)phenol), etc.

The hard coating layer is not particularly limited as long as it is to protect members such as the polarizing plate, the variable transmittance layer, etc. from external physical and chemical shocks, and hard coating layers currently developed or to be developed may be used thereto.

According to the embodiment, the hard coating layer may be formed by applying compositions for forming a hard coating layer on another member and then hardening the layer by light or heat. The compositions for forming a hard coating layer are not particularly limited and, for example, may include photocurable compounds and photoinitiators.

As the photocurable compounds and the photoinitiators, those commonly used in the art can be used without limitation, for example, the photocurable compounds may be photopolymerizable monomers, photopolymerizable oligomers, etc., for example, may be monofunctional and/or multifunctional (meth) acrylate, and the photoinitiators may be oxime ester-based photoinitiators, etc.

In addition to the variable transmittance optical stack, the present disclosure includes a smart window including the same. Furthermore, the present disclosure includes a vehicle in which the smart window is applied to at least one of front windows, rear windows, side windows, sunroof windows, and inner partitions, and a building window including the smart window.

**Mode for Invention**

Hereinbelow, an embodiment of the present disclosure will be described in detail. However, the present disclosure may not be limited to embodiments disclosed below and may be implemented in various shapes, and the embodiments merely ensure that the present disclosure of the present disclosure is complete and is provided to fully inform those skilled in the art of the scope of the invention, and may be defined by the scope of the claims.

**Examples and Comparative examples: formation of the optical stack**

**Example 1**

An absorptive polarizing plate (outdoor side polarizing plate) is manufactured by bonding a cellulose triacetate film (25μm TAC, manufactured by Konica) and a cyclo-olefin film (23μm COP, manufactured by Zeon) on opposite surfaces of a polyvinyl alcohol-based polarizer (12μm) with an adhesive. Thereafter, a transparent conductive layer is formed by sputtering ITO on a surface of the cyclo-olefin film of the absorptive polarizing plate. Meanwhile, a reflective polarizing plate (indoor side polarizing plate) is manufactured by bonding a reflective polarizer (APF, manufactured by 3M) on one surface of the cyclo-olefin film (23μm COP, manufactured by Zeon), and a transparent conductive layer is formed by on a surface of a cyclo-olefin film like the absorptive polarizing plate. Thereafter, the optical stack in the example 1 is manufactured by respectively forming alignment films on the transparent conductive layer of the absorptive polarizing plate and the transparent conductive layer of the reflective polarizing plate, and then being bonded together with the liquid crystal, which is driven in the TN mode, located therebetween. At this point, a transmission axis of the absorptive polarizing plate and a transmission axis of the reflective polarizing plate are perpendicular to each other.

**Example 2**

Each of a first absorptive polarizing plate (outdoor side polarizing plate) and a second absorptive polarizing plate are manufactured by bonding a cellulose triacetate film (25μm TAC, manufactured by Konica) and a cyclo-olefin film (23μm COP, manufactured by Zeon) on opposite surfaces of a polyvinyl alcohol-based polarizer (12μm) with an adhesive. Thereafter, a transparent conductive layer is formed by sputtering ITO on a surface of the cyclo-olefin film of the first absorptive polarizing plate. Meanwhile, a reflective polarizing plate is manufactured by bonding a reflective polarizer (APF, manufactured by 3M) on one surface of a cyclo-olefin film (23μm COP, manufactured by Zeon), and then the indoor-side polarizing plate is manufactured by bonding the reflective polarizing plate and the second absorptive polarizing plate with an adhesive formed on the cyclo-olefin film of the second absorptive polarizing plate. Thereafter, the optical stack in the example 2 is manufactured such that a transparent conductive layer is formed on a surface of the cyclo-olefin film of the reflective polarizing plate, and alignment films are formed on the transparent conductive layers of the outdoor-side polarizing plate and the indoor-side polarizing plate, and then the films are bonded with the liquid crystal layer, which is driven in the TN mode, located therebetween. At this point, a transmission axis of the reflective polarizing plate is parallel to a transmission axis of the second absorptive polarizing plate, and is perpendicular to a transmission axis of the first absorptive polarizing plate.

**Example 3**

Each of a first reflective polarizing plate (outdoor side polarizing plate) and a second reflective polarizing plate (indoor side polarizing plate) may be manufactured by bonding a reflective polarizer (APF, manufactured by 3M) on one surface of a cyclo-olefin film (23μm COP, manufactured by Zeon). Thereafter, a transparent conductive layer is formed by sputtering ITO on a surface of the cyclo-olefin film of each of the first reflective polarizing plate and the second reflective polarizing plate. Thereafter, an optical stack in the example 3 is manufactured by forming an alignment film on the transparent conductive layer of each of the first and second reflective polarizing plate and then bonding the films with a liquid crystal layer, which is driven in the TN mode, located therebetween. At this point, a transmission axis of the first reflective polarizing plate and a transmission axis of the second reflective polarizing plate are perpendicular to each other.

**Comparative example 1**

Each of a first absorptive polarizing plate (outdoor side polarizing plate) and a second absorptive polarizing plate (indoor side polarizing plate) are manufactured by bonding a cellulose triacetate film (25μm TAC, manufactured by Konica) and a cyclo-olefin film (23μm COP, manufactured by Zeon) on opposite surfaces of a polyvinyl alcohol-based polarizer (12μm) with an adhesive. Thereafter, a transparent conductive layer is formed by sputtering ITO on a surface of the cyclo-olefin film of each of the first absorptive polarizing plate and the second absorptive polarizing plate. Thereafter, the optical stack in the comparative example 1 is manufactured by respectively forming alignment films on the transparent conductive layer of the first absorptive polarizing plate and the transparent conductive layer of the second absorptive polarizing plate, and then being bonded together with the liquid crystal, which is driven in the TN mode, located therebetween. At this point, a transmission axis of the first absorptive polarizing plate and a transmission axis of the second absorptive polarizing plate are perpendicular to each other.

**Experimental example: evaluation of variable range of transmittance**

For the optical stacks in the examples 1 to 3 and the comparative example 1, the transmittances in the voltage application state and the voltage non-application state and a variable range are evaluated, and the results are represented in Table 1 below.

[Table 1]

|  | Transmittance ($T_{max}$) in voltage non-application | Transmittance ($T_{min}$) in Voltage application | Variable transmittance range ($T_{max}$-$T_{min}$) |
|---|---|---|---|
| Example 1 | 37.4 % | 1.7 % | 35.7 % |
| Example 2 | 37.1 % | 0.5 % | 36.6 % |
| Example 3 | 44.5 % | 4.0 % | 40.5 % |
| Comparative example 1 | 31.6 % | 0.0 % | 31.6 % |

Referring to Table 1, each of the variable transmittance optical stacks in the examples 1 to 3 including at least one reflective polarizing plate has a variable transmittance range ranged from 35.7 % to 40.5 %.
However, the variable transmittance optical stack in the comparative example 1 without the reflective polarizing plate has a variable transmittance range of 31.6 %.
Therefore, according to the present disclosure, it can be confirmed that the variable transmittance range according to ON and OFF states of the variable transmittance optical stack including the reflective polarizing plate is further improved.

**Industrial Applicability**

The variable transmittance optical stack according to the present disclosure can omit a process in which a conductive layer is formed on a substrate for formation of a conventional optical stack and the formed conductive layer is coupled to other member, so that the manufacturing process thereof can be simplified in comparison to the manufacturing process of the conventional optical stack.

**Claims**

1.   A variable transmittance optical stack comprising:

a first polarizing plate;
a first transparent conductive layer formed on one surface of the first polarizing plate;
a second polarizing plate opposite to the first polarizing plate;
a second transparent conductive layer formed on one surface of the second polarizing plate, and opposite to the first transparent conductive layer; and
a liquid crystal layer provided between the first transparent conductive layer and the second transparent conductive layer,
wherein at least one transparent conductive layer of the first transparent conductive layer and the second transparent conductive layer is formed by directly contacting with any one polarizing plate of the first polarizing plate and the second polarizing plate, and
at least one polarizing plate of the first polarizing plate and the second polarizing plate comprises a reflective polarizing plate.

2. The variable transmittance optical stack of claim 1, wherein the first polarizing plate and the second polarizing plate comprise a reflective polarizing plate.

3. The variable transmittance optical stack of claim 1, wherein at least one polarizing plate of the first polarizing plate and the second polarizing plate has a multi-layered structure comprising an absorptive polarizing plate and a reflective polarizing plate.

4. The variable transmittance optical stack of claim 1, wherein a transmission axis of the first polarizing plate and a transmission axis of the second polarizing plate are perpendicular to each other.

5. The variable transmittance optical stack of claim 1, wherein at least one polarizing plate of the first polarizing plate and the second polarizing plate comprises one or more types of functional layers selected from a group consisting of a protective layer, a retardation matching layer, and a refractive index-matching layer.

6. The variable transmittance optical stack of claim 1, wherein at least one polarizing plate of the first polarizing plate and the second polarizing plate has a thickness ranged from 30 to 200$\mu$m.

7. The variable transmittance optical stack of claim 1, wherein at least one transparent conductive layer of the first transparent conductive layer and the second transparent conductive layer is formed by directly contacting with any one polarizing plate of the first polarizing plate and the second polarizing plate without a separate or additional substance between the polarizing plate and the transparent conductive layer.

8. The variable transmittance optical stack of claim 1, wherein at least one transparent conductive layer of the first transparent conductive layer and the second transparent conductive layer is formed by directly contacting with any one polarizing plate of the first polarizing plate and the second polarizing plate with a highly adhesive layer between the polarizing plate and the transparent conductive layer.

9. The variable transmittance optical stack of claim 1, wherein at least one transparent conductive layer of the first transparent conductive layer and the second transparent conductive layer comprises one or more types selected from a group consisting of transparent conductive oxide, metal, carbonaceous material, conductive polymers, conductive ink, and nanowires.

10. The variable transmittance optical stack of claim 1, wherein the liquid crystal layer is driven in a twisted nematic mode.

11. The variable transmittance optical stack of claim 1, wherein the liquid crystal layer comprises one or more types selected from a group consisting of a ball spacer and a column spacer.

12. The variable transmittance optical stack of claim 11, wherein the ball spacer has a diameter ranged from 1 to 10$\mu$m.

13. The variable transmittance optical stack of claim 11, wherein an occupancy area of the ball spacer in the liquid crystal layer is ranged from 0.01 to 10% of the area of the liquid crystal layer.

14. The variable transmittance optical stack of claim 1, wherein the variable transmittance optical stack comprises one or more types selected from a group consisting of an alignment film, a pressure sensitive adhesive/adhesive layer, an ultraviolet ray absorption layer, and a hard coating layer.

15. A manufacturing method for the variable transmittance optical stack of any one of claims 1 to 14.

16. A smart window comprising the variable transmittance optical stack of any one of claims 1 to 14.

17. A vehicle in which the smart window of claim 16 is applied to at least one of a front window, a rear window, a side window, a sunroof window, and an inner partition thereof.

18. A window and a door for a building, the window and the door comprising the smart window of claim 16.

FIG. 1

FIG. 2A

| | |
|---|---|
| Absorptive polarizing plate | 100-1 |
| First transparent conductive layer | 200-1 |
| Liquid crystal layer | 300 |
| Second transparent conductive layer | 200-2 |
| Reflective polarizing plate | 100-2 |

FIG. 2B

| | |
|---|---|
| Absorptive polarizing plate | ⎫ |
| Reflective polarizing plate | ⎬ 100-1 |
| First transparent conductive layer | 200-1 |
| Liquid crystal layer | 300 |
| Second transparent conductive layer | 200-2 |
| Absorptive polarizing plate | 100-2 |

FIG. 2C

| | |
|---|---|
| Reflective polarizing plate | 100-1 |
| First transparent conductive layer | 200-1 |
| Liquid crystal layer | 300 |
| Second transparent conductive layer | 200-2 |
| Reflective polarizing plate | 100-2 |

FIG. 3A

FIG. 3B

## INTERNATIONAL SEARCH REPORT

| | International application No. |
|---|---|
| | **PCT/KR2022/011952** |

**A.    CLASSIFICATION OF SUBJECT MATTER**

    **G02F 1/137**(2006.01)i; **G02F 1/1337**(2006.01)i; **G02B 5/30**(2006.01)i

According to International Patent Classification (IPC) or to both national classification and IPC

**B.    FIELDS SEARCHED**

Minimum documentation searched (classification system followed by classification symbols)

    G02F 1/137(2006.01); G02F 1/1335(2006.01); G02F 1/153(2006.01); G02F 1/163(2006.01)

Documentation searched other than minimum documentation to the extent that such documents are included in the fields searched

    Korean utility models and applications for utility models: IPC as above
    Japanese utility models and applications for utility models: IPC as above

Electronic data base consulted during the international search (name of data base and, where practicable, search terms used)

    eKOMPASS (KIPO internal) & keywords: 투과율 가변(transmittance variable), 광학 적층체(optical laminate), 편광판 (polarizer), 투명 도전층(transparent conductive layer), 스마트 윈도우(smart window)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2017-0064175 A (LG DISPLAY CO., LTD.) 09 June 2017 (2017-06-09)<br>    See paragraphs [0046]-[0049] and [0077]; claim 1; and figures 3a-3b. | 1-18 |
| Y | KR 10-2020-0019563 A (LG CHEM, LTD.) 24 February 2020 (2020-02-24)<br>    See paragraphs [0039]-[0041] and [0068]; claim 1; and figures 1-2 and 4. | 1-18 |
| A | KR 10-2018-0119520 A (LG CHEM, LTD.) 02 November 2018 (2018-11-02)<br>    See paragraphs [0132]-[0141]; claim 1; and figure 7. | 1-18 |
| A | KR 10-2019-0071941 A (SUNGMOON ELECTRONICS CO., LTD.) 25 June 2019 (2019-06-25)<br>    See paragraphs [0026]-[0040]; claim 1; and figure 1. | 1-18 |
| A | KR 10-2019-0022611 A (GENTEX CORPORATION) 06 March 2019 (2019-03-06)<br>    See paragraphs [0036]-[0041]; claim 1; and figure 2. | 1-18 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 November 2022** | **14 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2022/011952** |

| Patent document cited in search report | | | Publication date (day/month/year) | Patent family member(s) | | | Publication date (day/month/year) |
| --- | --- | --- | --- | --- | --- | --- | --- |
| KR | 10-2017-0064175 | A | 09 June 2017 | None | | | |
| KR | 10-2020-0019563 | A | 24 February 2020 | CN | 112204462 | A | 08 January 2021 |
| | | | | EP | 3839618 | A1 | 23 June 2021 |
| | | | | EP | 3839618 | A4 | 01 September 2021 |
| | | | | JP | 2021-524058 | A | 09 September 2021 |
| | | | | KR | 10-2183706 | B1 | 27 November 2020 |
| | | | | TW | 202009524 | A | 01 March 2020 |
| | | | | TW | I743524 | B | 21 October 2021 |
| | | | | US | 11429005 | B2 | 30 August 2022 |
| | | | | US | 2021-0223602 | A1 | 22 July 2021 |
| | | | | WO | 2020-036322 | A1 | 20 February 2020 |
| KR | 10-2018-0119520 | A | 02 November 2018 | CN | 110325890 | A | 11 October 2019 |
| | | | | CN | 110325890 | B | 14 December 2021 |
| | | | | EP | 3617777 | A1 | 04 March 2020 |
| | | | | EP | 3617777 | A4 | 04 March 2020 |
| | | | | EP | 3617777 | B1 | 29 December 2021 |
| | | | | JP | 2020-510860 | A | 09 April 2020 |
| | | | | JP | 6950139 | B2 | 13 October 2021 |
| | | | | KR | 10-2136102 | B1 | 22 July 2020 |
| | | | | US | 2020-0019008 | A1 | 16 January 2020 |
| | | | | WO | 2018-199616 | A1 | 01 November 2018 |
| KR | 10-2019-0071941 | A | 25 June 2019 | KR | 10-1999352 | B1 | 11 July 2019 |
| KR | 10-2019-0022611 | A | 06 March 2019 | CN | 109414979 | A | 01 March 2019 |
| | | | | EP | 3475109 | A1 | 01 May 2019 |
| | | | | EP | 3475109 | A4 | 26 June 2019 |
| | | | | EP | 3475109 | B1 | 14 April 2021 |
| | | | | KR | 10-2406569 | B1 | 08 June 2022 |
| | | | | US | 10247996 | B2 | 02 April 2019 |
| | | | | US | 2017-0371222 | A1 | 28 December 2017 |
| | | | | WO | 2017-223336 | A1 | 28 December 2017 |

Form PCT/ISA/210 (patent family annex) (July 2022)

**EP 4 394 494 A1**

**REFERENCES CITED IN THE DESCRIPTION**

**Patent documents cited in the description**

- JP 2018010035 A